(19) **Europäisches Patentamt / European Patent Office / Office européen des brevets**

(11) **EP 4 299 889 B1**

(12) # EUROPEAN PATENT SPECIFICATION

(45) Date of publication and mention
of the grant of the patent:
**11.12.2024   Bulletin 2024/50**

(21) Application number: **23181704.0**

(22) Date of filing: **27.06.2023**

(51) International Patent Classification (IPC):
**F02D 35/02** $^{(2006.01)}$

(52) Cooperative Patent Classification (CPC):
**F02D 35/024; F02D 35/025; F02D 35/028**

(54) **METHOD TO ESTIMATE THE MAXIMUM PRESSURE INSIDE A COMBUSTION CHAMBER OF A CYLINDER OF AN INTERNAL COMBUSTION ENGINE**

VERFAHREN ZUR SCHÄTZUNG DES HÖCHSTDRUCKS IM INNEREN EINER BRENNKAMMER EINES ZYLINDERS EINER BRENNKRAFTMASCHINE

PROCÉDÉ D'ESTIMATION DE LA PRESSION MAXIMALE À L'INTÉRIEUR D'UNE CHAMBRE DE COMBUSTION D'UN CYLINDRE D'UN MOTEUR À COMBUSTION INTERNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.06.2022   IT 202200013879**

(43) Date of publication of application:
**03.01.2024   Bulletin 2024/01**

(73) Proprietors:
• **Marelli Europe S.p.A.**
**20011 Corbetta (MI) (IT)**
• **Alma Mater Studiorum - Università di Bologna**
**40126 Bologna (IT)**

(72) Inventors:
• **DE CESARE, Matteo**
**20011 CORBETTA (MI) (IT)**
• **PANCIROLI, Marco**
**20011 CORBETTA (MI) (IT)**
• **STOLA, Federico**
**20011 CORBETTA (MI) (IT)**
• **PONTI, Fabrizio**
**40126 BOLOGNA (IT)**
• **RAVAGLIOLI, Vittorio**
**40126 BOLOGNA (IT)**
• **SILVAGNI, Giacomo**
**40126 BOLOGNA (IT)**

(74) Representative: **Studio Torta S.p.A.**
**Via Viotti, 9**
**10121 Torino (IT)**

(56) References cited:
**WO-A1-2016/209919          DE-A1- 102007 057 142**
**DE-A1- 102013 200 542      US-A1- 2015 354 493**

• **KANG SONG ET AL: "Compound disturbance rejection control of spark ignition?controlled-autoignition hybrid combustion for gasoline engines", PROCEEDINGS OF THE INSTITUTION OF MECHANICAL ENGINEERS, PART D: JOURNAL OF AUTOMOBILE ENGINEERING, vol. 232, no. 2, February 2018 (2018-02-01), GB, pages 264 - 281, XP055580053, ISSN: 0954-4070, DOI: 10.1177/0954407017697477**
• **ERIKSSON LARS ET AL: "An analytic model for cylinder pressure in a four-stroke SI ENGINE", SAE 2010 COMMERCIAL VEHICLE ENGINEERING CONGRESS SAE TECHNICAL PAPERS, SAE INTERNATIONAL, US, no. 2002-01-0371, 3 April 2002 (2002-04-03), XP002390220, ISSN: 0148-7191**
• **SCOCOZZA GUIDO FEDERICO ET AL: "Development and Validation of a Virtual Sensor for Estimating the Maximum in-Cylinder Pressure of SI and GCI Engines", SAE 2010 COMMERCIAL VEHICLE ENGINEERING CONGRESS SAE TECHNICAL PAPERS, vol. 1, 12 September 2021 (2021-09-12), US, XP093091870, ISSN: 0148-7191, Retrieved from the Internet <URL:http://dx.doi.org/10.4271/2021-24-0026> [retrieved on 20231016], DOI: 10.4271/2021-24-0026**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a method to estimate the maximum pressure inside the combustion chamber of a cylinder of an internal combustion engine.

BACKGROUND ART

As is known, an internal combustion engine comprises a plurality of cylinders, each of which houses a respective piston mechanically connected by means of a connecting rod to a drive shaft to transmit to said drive shaft the force generated by the combustion inside the cylinder.

The internal combustion engine comprises an intake manifold connected to each cylinder by means of two intake valves and receives cool air (i.e. air coming from the external environment) . Moreover, the internal combustion engine comprises an exhaust manifold connected to each cylinder by means of two exhaust valves that flow into an exhaust pipe for emission of the gases produced by combustion into the atmosphere.

A corresponding injector is further provided for each cylinder; injection can be of indirect type (when each injector is arranged upstream of the cylinder in an intake pipe that connects the intake manifold to the cylinder) or of direct type (when each injector is partially arranged inside the cylinder).

Finally, each cylinder comprises a spark plug, which is arranged in the crown of the cylinder in central position between the intake valves and the exhaust valves and is activated cyclically to determine ignition of the gases compressed in the cylinder at the end of each compression stroke.

Alternatively, in the case of a diesel cycle internal combustion engine, ignition of the gases compressed in the cylinder takes place spontaneously, without the spark plug being necessary.

The engine further comprises a control unit, which supervises operation of the combustion engine and, among other things, drives the spark plugs to determine ignition of the gases compressed in each cylinder.

The complete combustion cycle is implemented by the succession of four strokes, at the end of which two revolutions of the drive shaft have been completed, for an angle of 720°. Taking as reference a direct injection system, during the intake stroke and/or the subsequent compression stroke and/or the subsequent expansion stroke, fuel is injected into the combustion chamber of the cylinder and in the expansion stroke or in the final part of the preceding compression stroke, the electrodes of the spark plug cause a spark that ignites the air-fuel mixture inside the cylinder giving rise to combustion, which produces an increase of temperature and pressure. Alternatively, in the case of a diesel cycle internal combustion engine, combustion takes place spontaneously upon reaching a given pressure and temperature during the compression stroke. Once the charge is trapped in the cylinder, the compression stroke and the combustion that takes place inside the cylinder determine the increase of pressure inside the combustion chamber until reaching the maximum pressure value. Currently there is no simplified and reliable model to estimate the increase of pressure inside of the cylinder generated by the compression stroke and by combustion. Consequently, the maximum pressure value can only be determined by means of the use of a dedicated pressure sensor arranged on the crown of each cylinder in a substantially central position; however, this solution has the drawback of being economically unfavourable. XP055580053 by KANG SONG ET AL. discloses a method to estimate the maximum pressure inside the combustion chamber of a cylinder of an internal combustion engine, which comprises estimating said maximum pressure based on the pressure value obtained at the end of a compression stroke of the combustion cycle and on a combustion index MFB50. XP002390220 by ERIKSSON LARS ET AL. discloses a concept of determining a pressure inside a combustion chamber including the pressure at the peak pressure location based on the pressure value obtained at the end of a compression stroke and MFB50.

DESCRIPTION OF THE INVENTION

The object of the present invention is to provide a method to estimate the maximum pressure inside the combustion chamber of a cylinder of an internal combustion engine, which does not have the drawbacks described above and, in particular, is simple and inexpensive to implement.

According to the present invention, there is provided a method to estimate the maximum pressure inside the combustion chamber of a cylinder of an internal combustion engine in accordance with the appended claims.

BRIEF DESCRIPTION OF THE DRAWINGS

The present invention will now be described with reference to the accompanying drawings, which illustrate a non-limiting example thereof, wherein:

- Fig. 1 is a schematic view of an internal combustion engine provided with a control unit that implements the estimation method of the present invention;
- Fig. 2 is a schematic view of a cylinder of the internal combustion engine of Fig. 1;
- Fig. 3 represents a Sabathé cycle used to schematise the combustion cycle inside a cylinder of the engine of Fig. 1;
- Fig. 4 illustrates in greater detail how the trend of the pressure inside the chamber varies when there is a variation of the combustion speed, synthesised by the MFB50 combustion index (centre of gravity of combustion);
- Fig. 5 illustrates the maximum pressure values detected in a cylinder of the engine of Fig. 1 when there is a variation of the MFB50 combustion index, with a speed of the internal combustion engine of 3000 rpm and with three different charges applied; and
- Fig. 6 illustrates the trend of an energy conversion function when there is a variation of the MFB50 combustion index.

## PREFERRED EMBODIMENTS OF THE INVENTION

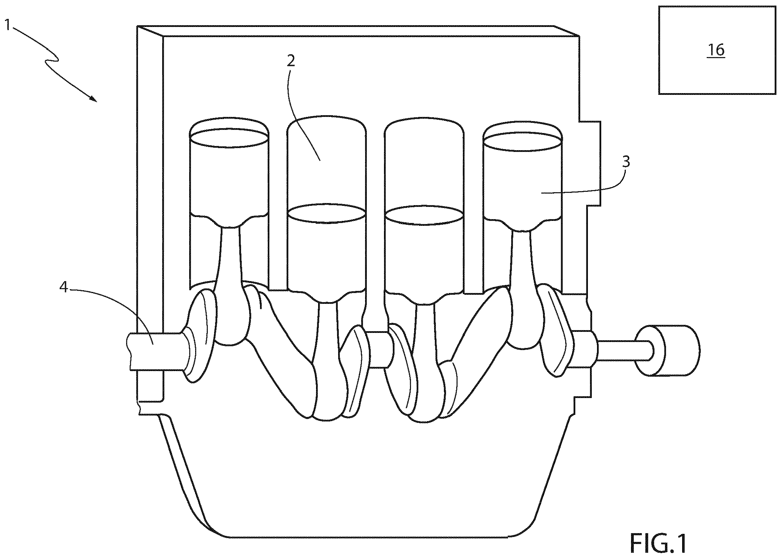

In Fig. 1, the number 1 indicates as a whole an internal combustion engine comprising four cylinders 2 arranged in line. Each cylinder 2 houses a respective piston 3 mechanically connected by means of a connecting rod to a drive shaft 4 to transmit to said drive shaft 4 the force generated by combustion inside the cylinder 2.

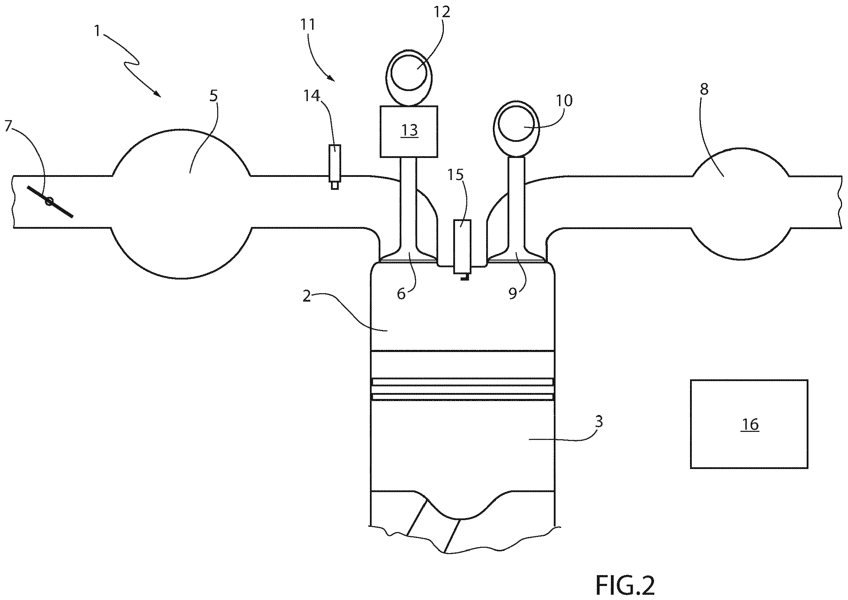

According to the illustration in Fig. 2, the internal combustion engine 1 comprises an intake manifold 5 connected to each cylinder 2 by means of two intake valves 6 (only one of which is illustrated in Fig. 2) and receives cool air (i.e. air coming from the external environment) through a throttle valve 7 movable between a closed position and a fully open position. Moreover, the internal combustion engine 1 comprises an exhaust manifold 8 connected to each cylinder 2 by means of two exhaust valves 9 (only one of which is illustrated in Fig. 2) which flows into an exhaust pipe (not illustrated) for emission of the gases produced by combustion into the atmosphere.

A corresponding injector 14 is provided for each cylinder 2; according to the embodiment illustrated in Fig. 2, injection is of indirect type and therefore each injector 14 is arranged upstream of the cylinder 2 in an intake pipe that connects the intake manifold 5 to the cylinder 2. According to an alternative embodiment, not illustrated, injection is of direct type and therefore each injector 14 is partially arranged inside the cylinder 2.

Moreover, each cylinder 2 comprises a spark plug 15, which is arranged in the crown of the cylinder 2 in a central position between the intake valves 5 and the exhaust valves 9 and is activated cyclically to determine ignition of the gases compressed in the cylinder 2 at the end of each compression stroke.

In a diesel engine 1, this spark plug is not necessary, as ignition of the gases compressed in the cylinder 2 takes place spontaneously during the compression stroke.

The engine 1 comprises a control unit 16, which supervises operation of the combustion engine 1 and, among other things, controls the spark plugs 15 to determine ignition of the compressed gases inside each cylinder 2.

The method implemented by the control unit 16 to estimate the maximum pressure $P_{MAX}$ reached in the combustion chamber of each cylinder 2 during a complete combustion cycle is described below.

Firstly, as is known, the complete combustion cycle is implemented by the succession of four strokes, at the end of which two revolutions of the drive shaft have been completed, for an angle of 720°. With reference to a direct injection system, during the intake stroke and/or the subsequent compression stroke and/or the subsequent expansion stroke, fuel is injected into the combustion chamber of the cylinder 2 and in the expansion stroke or in the final part of the preceding compression stroke, the electrodes of the spark plug cause a spark that ignites the air-fuel mixture inside the cylinder 2, giving rise to combustion, which produces an increase of temperature and pressure.

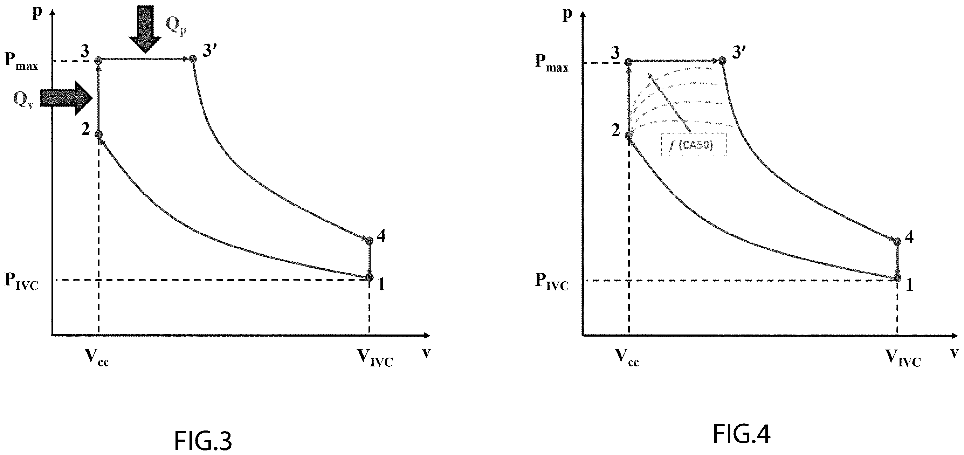

The applicant has analysed in detail the strokes of the combustion cycle that take place with the intake valves 6 closed (i.e. the expansion and compression stroke); as is known, once the charge is trapped in the cylinder 2, the compression stroke and the combustion that takes place inside the cylinder 2 determine increase of pressure inside said combustion chamber until reaching the maximum value $P_{MAX}$. Since no simplified model of the increase of the pressure generated by the compression stroke and by combustion exists, the combustion cycle is schematised as a heat exchange in two phases by means of a Sabathé cycle illustrated in Fig. 3. In particular, the combustion cycle can be schematised by means of a phase at constant volume and a subsequent phase at constant pressure; heat exchange at constant volume takes place with an increase of pressure from the value indicated with $P_2$ in Fig. 3 to the value indicated with $P_3$.

The total energy $Q_{TOT}$ produced during the combustion cycle is thus obtained through the sum of two contributions, i.e. the energy $Q_V$ produced in the phase at constant volume and the energy $Q_P$ produced in the phase at constant pressure.

The total energy $Q_{TOT}$ produced during the complete combustion cycle can also be expressed as the product of the fuel mass $m_{FUEL}$ injected into the cylinder during the combustion cycle for the lower heating value LHV of the fuel. Therefore, the following equation is valid:

$$Q_{TOT} = Q_V + Q_P = m_{FUEL} * LHV \quad [1]$$

As already mentioned, during the phase at constant volume the pressure increases from the value indicated with $P_2$ to the value indicated with $P_3$.

Advantageously, the pressure value $P_2$ obtained at the end of the compression stroke (considering an isentropic compression stroke) can be expressed by means of the following formula:

$$P_2 = P_{IVC} * r_c^\gamma * + f(m_{CYL}) * (1-k) \quad [2']$$

where $r_c$ represents the compression ratio; $P_{IVC}$ represents the pressure inside the combustion chamber of the cylinder 2 upon closing of the intake valves 6, i.e. when the compression stroke begins; $\gamma$ represents the heat capacity ratio; $m_{CYL}$ represents the air mass trapped in the cylinder 2 during the complete combustion cycle; k represents a parameter that can assume a value equal to 0 (zero) or 1 (one).

The heat capacity ratio $\gamma$ is determined based on the engine load and on the speed RPM of the internal combustion engine 1 (expressed in rpm) : in particular, by means of a map stored inside the control unit 16 that provides the heat capacity ratio $\gamma$ based on the engine load and on the speed RPM of the internal combustion engine 1.

The air mass $m_{CYL}$ trapped in the cylinder 2 during the complete combustion cycle is preferably estimated with a filling model (), with a speed density model, or through a mass flow sensor.

The function f $(m_{CYL})$ can instead by expressed as follows: f $(m_{CYL}) = m_{CYL} * R * T_2/V_{cc}$ [2"] where $V_{cc}$ is the volume of the combustion chamber of the cylinder 2, R is the universal constant of perfect gases and $T_2$ represents the temperature at the start of the phase at constant volume in the point indicated with 2 in the graph of Fig. 3 and can be calculated through formula [6] provided in the description below.

By simplifying formula [2'] the pressure value $P_2$ obtained at the end of the compression stroke (considering an isentropic compression stroke) can be expressed by means of the following formula:

$$P_2 = P_{IVC} * r_c^\gamma \quad [2]$$

where $r_c$ represents the compression ratio, $P_{IVC}$ represents the pressure inside the combustion chamber of the cylinder 2 upon closing of the intake valves 6 , i.e. when the compression stroke begins, and $\gamma$ represents the heat capacity ratio.

The heat capacity ratio $\gamma$ is determined based on the engine charge and on the speed RPM of the internal combustion engine 1 (expressed in rpm): in particular, by means of a map stored inside the control unit 16 that provides the heat capacity ratio $\gamma$ based on the engine load and on the speed RPM of the internal combustion engine 1.

The pressure $P_{IVC}$ can be estimated based on the product between the pressure $P_{INT}$ detected inside the intake manifold 5 and a value provided by a map g stored inside the control unit 16 and is variable based on the speed RPM of the internal combustion engine 1 (expressed in rpm) and on the instant IVC in which the intake valves 6 are closed. The pressure $P_{IVC}$ is thus expressed as follows:

$$P_{IVC} = P_{INT} * g(IVC, RPM) \quad [3]$$

The energy $Q_V$ produced in the phase at constant volume can instead be expressed as follows:

$$Q_V = m_{CYL} * c_V * (T_3 - T_2) \quad [4]$$

where $m_{CYL}$ is the air mass trapped in the cylinder 2 during the complete combustion cycle, cv is the specific heat at constant volume, while $T_2$ and $T_3$ represent, respectively, the temperature at the start of the phase at constant volume in the points indicated with 2 and 3 in the graph of Fig. 3.

As this is an isochoric transformation, the temperature $T_3$ can be expressed by means of the following formula:

$$T_3 = T_2 * P_3/P_2 \quad [5]$$

Instead, as the transformation in the Sabathé cycle from point 1 to point 2 is an isentropic transformation, the temperature $T_2$ can be expressed by means of the following formula:

$$T_2 = T_{IVC} * r_c^{\gamma-1} \quad [6]$$

Through formula [5], the ratio $P_3/P_2$ can thus be expressed as the ratio $T_3/T_2$ and using formulae [4] and [6], the ratio $P_3/P_2$ can finally be expressed through the following formula:

$$\frac{P_3}{P_2} = 1 + \frac{Q_V}{m_{CYL} * c_V * T_{IVC} * r_c^{\gamma-1}} \quad [7]$$

The air mass $m_{CYL}$ trapped in the cylinder 2 during the complete combustion cycle can be expressed based on the product of the fuel mass $m_{FUEL}$ injected into the cylinder 2 during the combustion cycle, on the air/fuel equivalence ratio $\lambda$ and on the stoichiometric air/fuel ratio $\lambda_{ST}$ as follows:

$$m_{CYL} = m_{FUEL} * \lambda * \lambda_{ST} \quad [8]$$

Moreover, the parameter $K_1$ is also introduced, which represents the energy fraction released during the phase at constant volume and is expressed as follows:

$$K_1 = Q_V/Q_{TOT} = Q_V/(m_{FUEL} * LHV) \quad [9]$$

Substituting the expressions [9] and [8] in formula [7], it follows that the ratio $P_3/P_2$ can be expressed as below:

$$\frac{P_3}{P_2} = 1 + \frac{K_1}{\lambda * c_V * T_{IVC} * r_c^{\gamma-1}} * \frac{LHV}{\lambda_{ST}} \quad [10]$$

From formula [10] it can be seen that, with the same conditions (in particular, with the same air/fuel equivalence ratio $\lambda$ and temperature $T_{IVC}$), the ratio $P_3/P_2$ is mainly influenced by the parameter $K_1$, i.e. by the energy fraction released during the phase at constant volume.

The energy fraction released during the phase at constant volume (i.e. the parameter $K_1$) that contributes to increasing the pressure to the value $P_3$ inside the combustion chamber is strongly correlated to the combustion speed; in other words, the energy fraction released during the phase at constant volume (i.e. the parameter $K_1$) that contributes to increasing the pressure to the value $P_3$ inside the combustion chamber is variable based on the MFB50 combustion index (50% Mass Fraction Burnt) that represents the engine angle (i.e. the crank angle) at which 50% of the fuel mass has been burnt inside the cylinder.

Typically, according to what is illustrated in Fig. 4, when the combustion speed increases causing an increase of pressure inside the combustion chamber, the MFB50 combustion index is anticipated, and vice versa, i.e. when the combustion speed decreases causing a reduction of the pressure inside the combustion chamber, the MFB50 combustion index is delayed. Considering a real internal combustion engine 1, the parameter $K_1$ is variable based on the MFB50 index and also determines the trend of the energy conversion function $P_3/P_2$.

Consequently, also the ratio $P_3/P_2$ is mainly variable based on the MFB50 combustion index.

The applicant carried out a series of calibration and set-up tests to identify the maximum pressure $P_{MAX}$ in the combustion chamber of the cylinder 2 (which corresponds to the pressure $P_3$ in Fig. 3) varying the MFB50 combustion index with the same speed RPM of the internal combustion engine 1 (expressed in rpm) and varying the engine load applied.

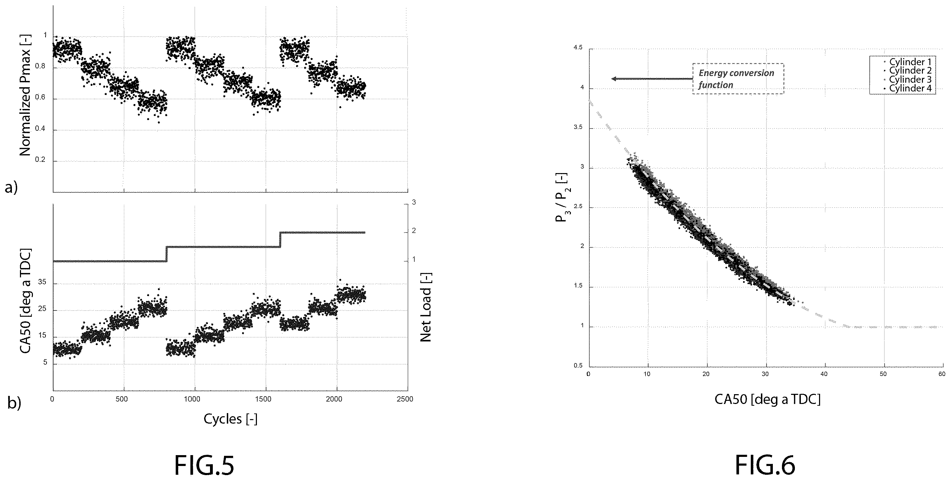

For example, Fig. 5 illustrates the maximum pressure values $P_{MAX}/P_3$ detected when there is a variation in the MFB50 combustion index, with a speed RPM of the internal combustion engine 1 equal to 3000 rpm and with three different loads applied.

The pressure value $P_2$ is calculated using formula [2] introduced previously; in particular, with $r_c$ that represents the compression ratio and is calculated as the ratio between the volume of the cylinder 2 upon closing of the intake valves 6 and the volume of the combustion chamber, $P_{IVC}$ represents the pressure inside the combustion chamber of the cylinder 2 upon closing of the intake valves 6 and is determined as defined in the description above, and $\gamma$ that represents the heat capacity ratio and is equal to 1.30.

The maximum pressure values $P_{MAX}/P_3$ when there is a variation in the MFB50 combustion index, determined as defined in the description above, are divided by the pressure value $P_2$ so as to obtain the trend of the energy conversion function $P_3/P_2$. Fig. 6 shows the trend of the energy conversion function $P_3/P_2$ when there is a variation in the MFB50 combustion index for the four cylinders 2. According to the illustration of Fig. 6 it can thus be established that the energy conversion function indicated with f in the description below is the same for all the cylinders 2 given the same conditions (in particular, with the same air/fuel equivalence ratio $\lambda$ and temperature $T_{IVC}$).

Formula [10] can thus be expressed as follows:

$$P_3/P_2 = f(MFB50)$$

$$f(MFB50) = 1 + \frac{K_1}{\lambda * c_V * T_{IVC} * r_c^{\gamma-1}} * \frac{LHV}{\lambda_{ST}} \qquad [11]$$

The energy conversion function f(MFB50) can be represented by a map stored in the control unit 16 or alternatively can be expressed as a quadratic function of the MFB50 combustion index as follows:

$$P_3/P_2 = f(MFB50) = a_0 + a_1*MFB50 + a_2*MFB50^2 \qquad [12]$$

The applicant has verified experimentally that the use of the energy conversion function f leads to a mean absolute percentage error in the determination of the maximum pressure values $P_{MAX}/P_3$ of 3%.

According to a further variant, it is possible to introduce corrections based on the air/fuel equivalence ratio $\lambda$ and on the temperature $T_{IVC}$.

Introducing said corrections, formula [12] is expressed as follows:

$$\frac{P_3}{P_2} = \left(f(MFB50)_{REF} - 1\right) * \frac{\lambda_{REF}}{\lambda} * \frac{T_{IVC\_REF}}{T_{IVC}} + 1 \qquad [13]$$

$$P_3 = P_2\left[\left(f(MFB50)_{REF} - 1\right) * \frac{\lambda_{REF}}{\lambda} * \frac{T_{IVC\_REF}}{T_{IVC}} + 1\right] \qquad [13*]$$

In this case, the energy conversion function f is considered at the reference values with regard to the air/fuel equivalence ratio $\lambda$ and the temperature $T_{IVC}$.

By then substituting the quadratic function introduced with formula [12], the following is obtained:

$$\frac{P_3}{P_2} = \left(\left(a_0 + a_1 * MFB50 + a_2 * MFB50^2\right)_{REF} - 1\right) * \frac{\lambda_{REF}}{\lambda} * \frac{T_{IVC\_REF}}{T_{IVC}} + 1 \qquad [14]$$

In this case, the maximum pressure $P_{MAX}$ that corresponds to the pressure $P_3$ can thus be expressed as follows:

$$P_{MAX} = P_3 = P_2 * \left[\left(\left(a_0 + a_1 * MFB50 + a_2 * MFB50^2\right)_{REF} - 1\right) * \frac{\lambda_{REF}}{\lambda} * \frac{T_{IVC\_REF}}{T_{IVC}} + 1\right] \qquad [14*]$$

In alternative to formulae [13], [14] and [14*], it is possible to introduce corrections based on the air/fuel equivalence ratio $\lambda$ and on the temperature $T_{IVC}$ by means of the coefficients $a_0$, $a_1$ and $a_2$. The ratio $P_3/P_2$ can thus be expressed as follows:

$$\frac{P_3}{P_2} = \left(a_0(\lambda, T_{IVC}) + a_1(\lambda, T_{IVC}) * MFB50 + a_2(\lambda, T_{IVC}) * MFB50^2\right)$$ [15]

Therefore, in this case the maximum pressure $P_{MAX}$ that corresponds to the pressure $P_3$ can be expressed as follows:

$$P_{MAX} = P_3 = P_2 * \left(a_0(\lambda, T_{IVC}) + a_1(\lambda, T_{IVC}) * MFB50 + a_2(\lambda, T_{IVC}) * MFB50^2\right)$$ [15*]

In substance, maps are stored inside the control unit 16, one for each of the coefficients $a_0$, $a_1$ and $a_2$; each of the maps provides the value of the respective coefficient based on the air/fuel equivalence ratio $\lambda$ and on the temperature $T_{IVC}$.

The value of the air/fuel equivalence ratio $\lambda$ is provided by an oxygen sensor of UHEGO or UEGO type housed along an exhaust pipe, downstream of the exhaust manifold 8 to detect the ratio between air/fuel ratio and the stoichiometric air/fuel ratio of the exhaust gases providing an output that indicates the oxygen content in the exhaust gases. Alternatively, the value of the air/fuel equivalence ratio $\lambda$ can be determined through estimation of the air mass trapped in each cylinder 2 as described, for example, in the patent application EP3650678 (incorporated herein by reference) and estimation of the injected fuel mass.

According to a variant, the internal combustion engine 1 is of flex type, i.e. which can be supplied with a fuel composed for the most part of fossil fuels, i.e. petrol, and for the remaining part of ethanol. In this case, it is possible to introduce a correction of the ratio $P_3/P_2$ based on the composition of the fuel, i.e. based on the mass percentage of ethanol contained in the fuel.

In particular, introducing said correction based on the mass percentage of ethanol contained in the fuel, the ratio $P_3/P_2$ can be expressed as follows:

$$\frac{P_3}{P_2} = \left(f(MFB50)_{REF} - 1\right) * \frac{\lambda_{REF}}{\lambda} * \frac{T_{IVC\_REF}}{T_{IVC}} * \frac{LHV(E)}{\lambda_{ST}(E)} * \frac{\lambda_{ST\_REF}}{LHV_{REF}} + 1$$ [16]

wherein the function f(MFB50) is applied in the case of a reference fuel with the reference values of air/fuel equivalence ratio $\lambda$ and of temperature $T_{IVC}$.

The lower heating value LHV of the fuel and the stoichiometric air/fuel ratio $\lambda_{ST}$ are determined based on the mass percentage of ethanol contained in the fuel.

The mass percentage of ethanol contained in the fuel is detected by means of a sensor arranged along a fuel delivery line or can be estimated by the control unit 16 based on the value of the air/fuel equivalence ratio $\lambda$ provided by the linear oxygen sensor of UHEGO or UEGO type.

In this case, the maximum pressure $P_{MAX}$ that corresponds to the pressure $P_3$ can thus be expressed as follows:

$$P_{MAX} = P_3 = P_2 * \left[\left(f(MFB50)_{REF} - 1\right) * \frac{\lambda_{REF}}{\lambda} * \frac{T_{IVC\_REF}}{T_{IVC}} * \frac{LHV(E)}{\lambda_{ST}(E)} * \frac{\lambda_{ST\_REF}}{LHV_{REF}} + 1\right]$$ [17]

According to a further variant, the maximum pressure $P_{MAX}$ that corresponds to the pressure $P_3$ can be expressed as follows:

$$P_{MAX} = P_3 = P_2 * \left[\left(FF(MFB50, E)_{REF} - 1\right) * \frac{\lambda_{REF}}{\lambda} * \frac{T_{IVC\_REF}}{T_{IVC}} + 1\right]$$ [18]

wherein FF represents an energy conversion function determined based on data collected in an experimental phase. The conversion function is variable based on the mass percentage of ethanol contained in the fuel E and on the MFB50 index in reference conditions with regard to the air/fuel equivalence ratio $\lambda$ and the temperature $T_{IVC}$. According to a preferred variant, the energy conversion function FF represents a map stored in the control unit 16.

Alternatively, the energy conversion function determined based on data collected in an experimental phase can be expressed as follows:

$$F(MFB50)_{REF} = F_{EMIN}(MFB50)_{REF} * w(E) + F_{EMAX}(MFB50) * (1 - w(E)) \quad [19]$$

The maximum pressure $P_{MAX}$ that corresponds to the pressure $P_3$ can be expressed as follows:

$$P_{MAX} = P_3 = P_2 * \left[ (F(MFB50)_{REF} - 1) * \frac{\lambda_{REF}}{\lambda} * \frac{T_{IVC\_REF}}{T_{IVC}} + 1 \right] \quad [20]$$

wherein w(E), $F_{EMIN}(MFB50)_{REF}$ and $F_{EMAX}(MFB50)_{REF}$ are vectors stored in the control unit 16.

The energy conversion function is calibrated using a set of experimental tests carried out at the end of the line on the engine test bench and stored in the control unit 16.

To estimate the maximum pressure $P_{MAX}$ that corresponds to the pressure $P_3$ it is therefore necessary to know the value of the MFB50 combustion index for each combustion cycle. The value of the MFB50 combustion index can be determined alternatively by means of an accelerometer or by means of a pressure sensor housed in the combustion chamber of the cylinder 2 or alternatively it can be estimated through the estimation method described in the patent EP2022967, the estimation method described in the patent EP2431595.

Clearly, in the case in which a pressure sensor is provided housed in the combustion chamber of the cylinder 2, the maximum pressure $P_{MAX}$ that corresponds to the pressure $P_3$ is measured through the dedicated pressure sensor; in this case, the method defined in the description can be advantageously applied to diagnose any malfunctions of the pressure sensor.

According to a preferred variant, the internal combustion engine 1 comprises a low pressure circuit (not illustrated), which in turn comprises a bypass pipe that originates from an exhaust pipe, downstream of the exhaust manifold 8, and flows into a suction pipe, upstream of the intake manifold 5; said bypass pipe is connected in parallel to a turbocharger, is regulated by an EGR valve and is provided with a heat exchanger having the function of cooling the gases delivered from the exhaust manifold 8.

The value of the temperature $T_{IVC}$ is instead determined based on the temperature $T_{INT}$ measured inside the intake manifold 5, on the intake efficiency $\eta_{INT}$, on the rotation speed n of the internal combustion engine 1 (expressed in rpm), on the closing timing IVC of the intake valves 6 and on a quantity $R_{EGRi}$ indicative of the incidence of the exhaust gases recirculated through the overlap phase of the exhaust valves 9 and of the intake valves 6 and of the residues present inside the cylinder 2 on the gas mixture trapped in the cylinder 2. In fact, in the case in which the pressure in the exhaust manifold 8 is greater than the pressure in the intake manifold 5, a portion of the exhaust gases produced by combustion flows from the exhaust to the intake through the combustion chamber and the overlap, i.e. when the intake and exhaust valves are simultaneously open and said portion of the exhaust gases will then be recirculated into the combustion chamber through the intake valve 6 during the suction stroke. This operating mode is indicated as "inner EGR".

The value of the temperature $T_{IVC}$ can be expressed as follows:

$$T_{IVC} = T_{INT} * f_1 (\eta_{INT}, n) * f_2(IVC, R_{EGRi}) \quad [21]$$

wherein the functions $f_1$ and $f_2$ are also maps stored inside the control unit 16; each of the two maps provides the respective value based on the intake efficiency $\eta_{INT}$, and on the rotation speed n of the internal combustion engine 1 on the one hand, and on the closing timing IVC of the intake valves 6 and on the quantity $R_{EGRi}$ on the other hand. The maps used to determine the functions $f_1$ and $f_2$ are calibrated in a preliminary set-up phase on the basis of experimental data.

The intake efficiency $\eta_{INT}$ is instead calculated by means of the ratio between the air mass $m_A$ trapped in the cylinder 2 upon closing of the intake valves 6 and the reference air mass $m_{A\_REF}$ (i.e. the mass that fills the cylinder 2 at the reference conditions of 25°C and 1.013 bar).

If the internal combustion engine 1 comprises a low temperature gas recirculation circuit, the method comprises the further steps of calculating the quantity $R_{EGR}$ indicative of the incidence of a low pressure circuit on the gas mixture that flows in the intake pipe 6:

$R_{EGR}$ = $M_{EGR\_LP}$/$M_{TOT\ OT}$ mass of the gas mixture that flows in the intake pipe 6; and

$M_{EGR\_LP}$ mass of exhaust gas recirculated through the low pressure circuit that flows in the intake pipe 6.

The method described above has several advantages; in particular, it is simple and inexpensive to implement, does not require a high computational burden for the control unit 16 and allows the maximum pressure value $P_{MAX}$/$P_3$ inside the combustion chamber of the cylinder 2 to be estimated in a very reliable way.

LIST OF REFERENCE NUMBERS

[0075]

| 1 | internal combustion engine |
| 2 | cylinder |
| 3 | piston |
| 4 | drive shaft |
| 5 | intake manifold |
| 6 | intake valve |
| 7 | throttle valve |
| 8 | exhaust manifold |
| 9 | exhaust valve |
| 10 | cam shaft |
| 11 | control device |
| 12 | cam shaft |
| 13 | hydraulic actuator |
| 14 | injector |
| 15 | spark plug |
| 16 | control unit |

**Claims**

1. A method to estimate the maximum pressure ($P_{MAX}$, $P_3$) inside the combustion chamber of a cylinder (2) of an internal combustion engine (1), which comprises estimating the maximum pressure ($P_{MAX}$, $P_3$) according to the following formula:

$$P_{MAX} = P_3 = P_2 * \left[ \left( f(MFB50)_{REF} - 1 \right) * \frac{\lambda_{REF}}{\lambda} * \frac{T_{IVC\_REF}}{T_{IVC}} * \frac{LHV(E)}{\lambda_{ST}(E)} * \frac{\lambda_{ST\_REF}}{LHV_{REF}} + 1 \right] \quad [17]$$

$f(MFB50)_{REF}$ energy conversion function based on the MFB50 combustion index considered at the reference values of the air/fuel equivalence ratio ($\lambda$) and on the temperature ($T_{IVC}$) inside the combustion chamber of the cylinder (2) upon closing of the intake valves (6), wherein the value of the MFB50 combustion index is alternatively determined by means of an accelerometer or by means of a pressure sensor housed in the combustion chamber of the cylinder (2);
À air/fuel equivalence ratio;
$\lambda_{REF}$ reference air/fuel equivalence ratio;
$T_{IVC}$ temperature inside the combustion chamber of the cylinder (2) upon closing of the intake valves (6);
$T_{IVC\_REF}$ reference temperature inside the combustion chamber of the cylinder (2) upon closing of the intake valves (6);
$\lambda_{ST}$ stoichiometric air/fuel ratio;
$\lambda_{ST\_REF}$ reference stoichiometric air/fuel ratio;
LHV lower heating value of the fuel;
$LHV_{REF}$ reference lower heating value of the fuel;
E mass percentage of ethanol contained in the fuel; and
$P_2$ pressure value obtained at the end of the compression stroke of the combustion cycle is calculated as follows:

EP 4 299 889 B1

$$P_2 = P_{IVC} * r_c^{\gamma} * + f(m_{CYL}) * (1-k) \quad [2']$$

$r_c$ compression ratio
$P_{IVC}$ pressure inside the combustion chamber of the cylinder (2) upon closing of the intake valves (6), i.e. when the compression stroke begins;
$\gamma$ heat capacity ratio;
$m_{CYL}$ air mass trapped in the cylinder (2) during the complete combustion cycle; and
k parameter equal to 0 or 1.

2. The method according to claim 1, wherein the function $f(m_{CYL})$ is expressed as follows:

$$f(m_{CYL}) = m_{CYL} * R * T_2/V_{cc} \quad [2'']$$

$V_{cc}$ volume of the combustion chamber of the cylinder (2);
R universal constant of perfect gases;
$T_2$ temperature at the start of the phase at constant volume.

3. The method according to claim 1 or 2, wherein the energy conversion function $f(MFB50)_{REF}$ considered at the reference values is represented by a map stored in a control unit.

4. The method according to claim 1 or 2, wherein the energy conversion function $f(MFB50)_{REF}$ considered at the reference values is expressed as a quadratic function of the MFB50 combustion index:

$$P_3/P_2 = f(MFB50) = a_0 + a_1*MFB50 + a_2*MFB50^2 \quad [12]$$

wherein $a_0$, $a_1$ and $a_2$ are coefficients determined in a preliminary set-up phase.

5. The method according to claim 4, wherein each one of said coefficients ($a_0$, $a_1$, $a_2$) is determined based on the air/fuel equivalence ratio ($\lambda$) and on the temperature ($T_{IVC}$) inside the combustion chamber of the cylinder (2) upon closing of the intake valves (6).

6. The method according to any one of the preceding claims, wherein the value of the air/fuel equivalence ratio ($\lambda$) is provided by an oxygen sensor housed along an exhaust pipe.

7. The method according to any one of the preceding claims, wherein the pressure value ($P_2$) obtained at the end of the compression stroke of the combustion cycle is calculated as follows:

$$P_2 = P_{IVC} * r_c^{\gamma} \quad [2]$$

$r_c$ compression ratio
$P_{IVC}$ pressure inside the combustion chamber of the cylinder (2) upon closing of the intake valves (6), i.e. when the compression stroke begins; and
$\gamma$ heat capacity ratio.

8. The method according to claim 7, wherein the pressure ($P_{IVC}$) inside the combustion chamber of the cylinder (2) upon closing of the intake valves (6) is determined based on the product between the pressure ($P_{INT}$) detected inside an intake manifold (5) and a value provided by a first map (g) and variable depending on the speed (RPM) of the internal combustion engine (1) and on the instant (IVC) in which the intake valves (6) are closed.

9. The method according to claim 7, wherein the heat capacity ratio ($\gamma$) is determined based on the engine load and on the speed (RPM) of the internal combustion engine (1).

10. The method according to any one of the preceding claims, wherein the value of the temperature ($T_{IVC}$) inside the combustion chamber of the cylinder (2) upon closing of the intake valves (6) is determined based on a temperature

($T_{INT}$) measured inside an intake manifold (5), on an intake efficiency ($\eta_{INT}$), on a rotation speed (n), on a closing timing (IVC) of the intake valves (6) and on a quantity ($R_{EGRi}$) indicative of the incidence of the inner EGR.

11. The method according to claim 10, wherein the value of the temperature ($T_{IVC}$) inside the combustion chamber of the cylinder (2) upon closing of the intake valves (6) is determined based on the temperature ($T_{INT}$) measured inside an intake manifold (5) multiplied by the value provided by a first map ($f_1$) variable depending on the intake efficiency ($\eta_{INT}$) and on the rotation speed (n) multiplied by the value provided by a second map variable depending on the closing timing (IVC) of the intake valves (6) and on the quantity ($R_{EGRi}$) indicative of the incidence of the inner EGR.

**Patentansprüche**

1. Verfahren zum Schätzen des maximalen Drucks ($P_{MAX}$, $P_3$) im Inneren des Brennraums eines Zylinders (2) einer Verbrennungskraftmaschine (1), das ein Schätzen des maximalen Drucks ($P_{MAX}$, $P_3$) gemäß der folgenden Formel aufweist:

$$P_{MAX} = P_3 = P_2 * \left[ \left( f(MFB50)_{REF} - 1 \right) * \frac{\lambda_{REF}}{\lambda} * \frac{T_{IVC\_REF}}{T_{IVC}} * \frac{LHV(E)}{\lambda_{ST}(E)} * \frac{\lambda_{ST\_REF}}{LHV_{REF}} + 1 \right] \quad [17]$$

wobei $f(MFB50)_{REF}$ eine Energieumwandlungsfunktion auf Basis des 50%-Massenumsatzpunkts MFB50 ist, der bei den Referenzwerten des Verbrennungsluftverhältnisses ($\lambda$) und der Temperatur ($T_{IVC}$) im Inneren des Brennraums des Zylinders (2) nach dem Schließen der Einlassventile (6) betrachtet wird, wobei der Wert des 50%-Massenumsatzpunkts MFB50 alternativ mittels eines Beschleunigungsmessers oder mittels eines Drucksensors bestimmt wird, der in dem Brennraum des Zylinders (2) untergebracht ist; wobei
À das Verbrennungsluftverhältnis;
$\lambda_{REF}$ das Referenz-Verbrennungsluftverhältnis;
$T_{IVC}$ die Temperatur im Inneren des Brennraums des Zylinders (2) nach dem Schließen der Einlassventile (6);
$T_{IVC\_REF}$ die Referenz-Temperatur im Inneren des Brennraums des Zylinders (2) nach dem Schließen der Einlassventile (6);
$\lambda_{ST}$ das stöchiometrische Kraftstoff-Luft-Verhältnis;
$\lambda_{ST\_REF}$ das stöchiometrische Referenz-Kraftstoff-Luft-Verhältnis;
LHV der untere Heizwert des Kraftstoffs;
$LHV_{REF}$ der untere Referenz-Heizwert des Kraftstoffs;
E der Massenanteil des in dem Kraftstoff enthaltenen Ethanols; und
$P_2$ der Druckwert, der am Ende des Verdichtungstakts des Viertaktzyklus erhalten und wie folgt berechnet wird:

$$P_2 = P_{IVC} * r_c^\gamma * + f(m_{CYL}) * (1-k) \quad [2']$$

$r_c$ das Verdichtungsverhältnis;
$P_{IVC}$ der Druck im Inneren des Brennraums des Zylinders (2) nach dem Schließen der Einlassventile (6), d. h., wenn der Verdichtungstakt beginnt;
$\gamma$ die spezifische Wärmekapazität;
$m_{CYL}$ die während des gesamten Viertaktzyklus im Zylinder (2) eingeschlossene Luftmasse; und
k ein Parameter gleich 0 oder 1 ist.

2. Verfahren gemäß Anspruch 1, wobei die Funktion $f(m_{CYL})$ wie folgt ausgedrückt wird:

$$f(m_{CYL}) = m_{CYL} * R * T_2/V_{cc} \quad [2'']$$

wobei

$V_{cc}$ das Volumen des Brennraums des Zylinders (2);
R die universelle Konstante idealer Gase;
$T_2$ die Temperatur zu Beginn der Phase bei konstantem Volumen ist.

3. Verfahren gemäß Anspruch 1 oder 2, wobei die Energieumwandlungsfunktion f(MFB50)$_{REF}$, die bei den Referenzwerten betrachtet wird, durch ein in einer Steuerungseinheit gespeichertes Kennfeld repräsentiert wird.

4. Verfahren gemäß Anspruch 1 oder 2, wobei die Energieumwandlungsfunktion f(MFB50)$_{REF}$, die bei den Referenzwerten betrachtet wird, als eine quadratische Funktion des 50%-Massenumsatzpunkts MFB50 ausgedrückt wird:

$$P_3/P_2 = f(MFB50) = a_0 + a_1*MFB50 + a_2*MFB50^2 \; [12]$$

wobei $a_0$, $a_1$ und $a_2$ Koeffizienten sind, die in einer vorgeschalteten Einrichtungsphase bestimmt werden.

5. Verfahren gemäß Anspruch 4, wobei jeder der Koeffizienten ($a_0$, $a_1$, $a_2$) auf Basis eines Verbrennungsluftverhältnisses ($\lambda$) und der Temperatur ($T_{IVC}$) im Inneren des Brennraums des Zylinders (2) nach Schließen der Einlassventile (6) bestimmt wird.

6. Verfahren gemäß einem der vorhergehenden Ansprüche, wobei der Wert des Verbrennungsluftverhältnisses ($\lambda$) durch eine Lambdasonde bereitgestellt wird, die entlang eines Abgasrohrs untergebracht ist.

7. Verfahren gemäß einem der vorhergehenden Ansprüche, wobei der Druckwert ($P_2$), der am Ende des Verdichtungstakts des Viertaktzyklus erhalten wird, wie folgt berechnet wird:

$$P_2 = P_{IVC} * r_c{}^\gamma \; [2]$$

wobei

$r_c$ das Verdichtungsverhältnis;
$P_{IVC}$ der Druck im Inneren des Brennraums des Zylinders (2) nach Schließen der Einlassventile (6) ist, d. h., wenn der Verdichtungstakt beginnt; und
$\gamma$ die spezifische Wärmekapazität ist.

8. Verfahren gemäß Anspruch 7, wobei der Druck ($P_{IVC}$) im Inneren des Brennraums des Zylinders (2) nach Schließen der Einlassventile (6) auf Basis des Produkts des Drucks ($P_{INT}$), der im Inneren eines Ansaugkrümmers (5) erfasst wird, und eines Werts, der durch ein erstes Kennfeld (g) bereitgestellt wird und in Abhängigkeit von der Drehzahl (RPM) der Verbrennungskraftmaschine (1) und dem Zeitpunkt (IVC) variabel ist, zu dem die Einlassventile (6) geschlossen werden, bestimmt wird.

9. Verfahren gemäß Anspruch 7, wobei die spezifische Wärmekapazität ($\gamma$) auf Basis der Motorlast und der Drehzahl (RPM) der Verbrennungskraftmaschine (1) bestimmt wird.

10. Verfahren gemäß einem der vorhergehenden Ansprüche, wobei der Wert der Temperatur ($T_{IVC}$) im Inneren des Brennraums des Zylinders (2) nach Schließen der Einlassventile (6) auf Basis einer Temperatur ($T_{INT}$), die im Inneren eines Ansaugkrümmers (5) gemessen wird, eines Ansaugwirkungsgrads ($\eta_{INT}$), einer Drehzahl (n), einer Schließzeit (IVC) der Einlassventile (6) und einer Größe ($R_{EGRi}$), die die Rückführrate der internen AGR angibt, bestimmt wird.

11. Verfahren gemäß Anspruch 10, wobei der Wert der Temperatur ($T_{IVC}$) im Inneren des Brennraums des Zylinders (2) nach Schließen der Einlassventile (6) auf Basis der Temperatur ($T_{INT}$), die im Inneren des Ansaugkrümmers (5) gemessen wird, multipliziert mit dem Wert, der durch ein erstes Kennfeld ($f_1$) bereitgestellt wird, der in Abhängigkeit von dem Ansaugwirkungsgrad ($\eta_{INT}$) und der Drehzahl (n) variabel ist, multipliziert mit dem Wert, der durch ein zweites Kennfeld bereitgestellt wird, der in Abhängigkeit von der Schließzeit (IVC) der Ansaugventile (6) und der Größe ($R_{EGRi}$) variabel ist, die die Rückführrate der internen AGR angibt, bestimmt wird.

**Revendications**

1. Méthode d'estimation de la pression maximale ($P_{MAX}$, $P_3$) à l'intérieur de la chambre de combustion d'un cylindre (2) d'un moteur à combustion interne (1), qui comprend l'estimation de la pression maximale ($P_{MAX}$, $P_3$) selon la

formule suivante :

$$P_{MAX} = P_3 = P_2 * \left[ \left(f(MFB50)_{REF} - 1\right) * \frac{\lambda_{REF}}{\lambda} * \frac{T_{IVC\_REF}}{T_{IVC}} * \frac{LHV(E)}{\lambda_{ST}(E)} * \frac{\lambda_{ST\_REF}}{LHV_{REF}} + 1 \right] \quad [17]$$

$f(MFB50)_{REF}$ fonction de conversion d'énergie basée sur l'indice de combustion MFB50 considéré aux valeurs de référence du rapport d'équivalence air/carburant ($\lambda$) et sur la température ($T_{IVC}$) à l'intérieur de la chambre de combustion du cylindre (2) lors de la fermeture des soupapes d'admission (6), dans laquelle la valeur de l'indice de combustion MFB50 est déterminée en variante au moyen d'un accéléromètre ou au moyen d'un capteur de pression logé dans la chambre de combustion du cylindre (2) ;

$\lambda$ rapport d'équivalence air/carburant ;

$\lambda_{REF}$ rapport d'équivalence air/carburant de référence ;

$T_{IVC}$ température à l'intérieur de la chambre de combustion du cylindre (2) lors de la fermeture des soupapes d'admission (6) ;

$T_{IVC\_REF}$ température de référence à l'intérieur de la chambre de combustion du cylindre (2) lors de la fermeture des soupapes d'admission (6) ;

$\lambda_{ST}$ rapport air/carburant stoechiométrique ;

$\lambda_{ST\_REF}$ rapport air/carburant stœchiométrique de référence ;

LHV valeur calorifique inférieure du carburant ;

$LHV_{REF}$ valeur calorifique inférieure de référence du carburant ;

E pourcentage en masse d'éthanol contenu dans le carburant ; et

$P_2$ valeur de pression obtenue à la fin de la course de compression du cycle de combustion calculée comme suit :

$$P_2 = P_{IVC} * r_C^Y * + f(m_{CYL}) * (1-k) \quad [2']$$

$r_C$ rapport de compression ;

$P_{IVC}$ pression à l'intérieur de la chambre de combustion du cylindre (2) lors de la fermeture des soupapes d'admission (6), c'est-à-dire lorsque la course de compression commence ;

Y rapport de capacité calorifique ;

$m_{CYL}$ masse d'air piégée dans le cylindre (2) pendant le cycle de combustion complet ; et

k paramètre égal à 0 ou 1.

2. Méthode selon la revendication 1, dans laquelle la fonction $f(m_{CYL})$ est exprimée comme suit :

$$f(m_{CYL}) = m_{CYL} * R * T_2/V_{cc} \quad [2'']$$

$V_{cc}$ volume de la chambre de combustion du cylindre (2) ;

R constante universelle des gaz parfaits ;

$T_2$ température au début de la phase à volume constant.

3. Méthode selon la revendication 1 ou 2, dans laquelle la fonction de conversion d'énergie $f(MFB50)_{REF}$ considérée aux valeurs de référence est représentée par une carte stockée dans une unité de commande.

4. Méthode selon la revendication 1 ou 2, dans laquelle la fonction de conversion d'énergie $f(MFB50)_{REF}$ considérée aux valeurs de référence est exprimée sous la forme d'une fonction quadratique de l'indice de combustion MFB50 :

$$P_3/P_2 = f(MFB50) = a_0 + a_1*MFB50 + a_2*MFB50^2 \quad [12]$$

dans laquelle $a_0$, $a_1$ et $a_2$ sont des coefficients déterminés dans une phase de configuration initiale.

5. Méthode selon la revendication 4, dans laquelle chacun desdits coefficients ($a_0$, $a_1$, $a_2$) est déterminé sur la base du rapport d'équivalence air/carburant ($\lambda$) et de la température ($T_{IVC}$) à l'intérieur de la chambre de combustion du cylindre (2) lors de la fermeture des soupapes d'admission (6).

6. Méthode selon l'une quelconque des revendications précédentes, dans laquelle la valeur du rapport d'équivalence air/carburant ($\lambda$) est fournie par un capteur d'oxygène logé le long d'un tuyau d'échappement.

7. Méthode selon l'une quelconque des revendications précédentes, dans laquelle la valeur de pression ($P_2$) obtenue à la fin de la course de compression du cycle de combustion est calculée comme suit :

$$P_2 = P_{IVC} * r_c{}^Y \quad [2]$$

$r_C$ rapport de compression ;
$P_{IVC}$ pression à l'intérieur de la chambre de combustion du cylindre (2) lors de la fermeture des soupapes d'admission (6), c'est-à-dire lorsque la course de compression commence ; et
$Y$ rapport de capacité calorifique.

8. Méthode selon la revendication 7, dans laquelle la pression ($P_{IVC}$) à l'intérieur de la chambre de combustion du cylindre (2) lors de la fermeture des soupapes d'admission (6) est déterminée sur la base du produit entre la pression ($P_{INT}$) détectée à l'intérieur d'un collecteur d'admission (5) et une valeur fournie par une première carte (g) et variable en fonction de la vitesse (tr/min) du moteur à combustion interne (1) et de l'instant (IVC) auquel les soupapes d'admission (6) sont fermées.

9. Méthode selon la revendication 7, dans laquelle le rapport de capacité calorifique (Y) est déterminé sur la base de la charge du moteur et de la vitesse (tr/min) du moteur à combustion interne (1).

10. Méthode selon l'une quelconque des revendications précédentes, dans laquelle la valeur de la température ($T_{IVC}$) à l'intérieur de la chambre de combustion du cylindre (2) lors de la fermeture des soupapes d'admission (6) est déterminée sur la base d'une température ($T_{INT}$) mesurée à l'intérieur d'un collecteur d'admission (5), d'une efficacité d'admission ($\eta_{INT}$), d'une vitesse de rotation (n), d'un moment de fermeture (IVC) des soupapes d'admission (6) et d'une quantité ($R_{EGRi}$) indicative de l'incidence de l'EGR interne.

11. Méthode selon la revendication 10, dans laquelle la valeur de la température ($T_{IVC}$) à l'intérieur de la chambre de combustion du cylindre (2) lors de la fermeture des soupapes d'admission (6) est déterminée sur la base de la température ($T_{INT}$) mesurée à l'intérieur d'un collecteur d'admission (5) multipliée par la valeur fournie par une première carte ($f_1$) variable en fonction de l'efficacité d'admission ($\eta_{INT}$) et de la vitesse de rotation (n) multipliée par la valeur fournie par une deuxième carte variable en fonction du moment de fermeture (IVC) des soupapes d'admission (6) et de la quantité ($R_{EGRi}$) indicative de l'incidence de l'EGR interne.

FIG.1

FIG.2

EP 4 299 889 B1

FIG.3

FIG.4

a)

b)

Cycles [-]

FIG.5

CA50 [deg a TDC]

FIG.6

EP 4 299 889 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3650678 A
- EP 2022967 A
- EP 2431595 A